# EUROPÄISCHE PATENTSCHRIFT

(11) **EP 0 322 551 B1**
(45) Veröffentlichungstag und Bekanntmachung des Hinweises auf die Patenterteilung: **08.09.1993**
(21) Anmeldenummer: 88119150.6
(22) Anmeldetag: 17.11.1988
(51) Int. Cl.: H01G 9/00

(54) **Aluminium-Elektrolytkondensator**
Aluminium electrolytic capacitor
Condensateur électrolytique à l'aluminium

(30) Priorität: 22.12.1987 DE 3743629
(43) Veröffentlichungstag der Anmeldung: 05.07.1989
(73) Patentinhaber: SIEMENS AKTIENGESELLSCHAFT, 80333 München (DE)
(72) Erfinder: Schweikert, Wilhelm, Dipl.-Ing. (FH), D-7920 Heidenheim (DE); Lauer, Wilhelm, Dr. Dipl.-Chem., D-7928 Giengen 6 (DE)

(56) Entgegenhaltungen:
- DE-A- 1 108 810
- DE-A- 1 252 804
- FR-A- 2 285 694
- GB-A- 1 069 685

## Beschreibung

Die Erfindung betrifft einen Aluminium-Elektrolytkondensator, der aus zwei Lagen miteinander verwickelter Aluminiumfolien besteht, von denen die Anodenfolie mit einer als Dielektrikum wirkenden Oxidschicht versehen ist und bei dem zwischen den Folien Abstandshalter angeordnet sind, die mit einem flüssigen, brennbare Bestandteile enthaltenden Betriebselektrolyt getränkt sind, der in ein Gehäuse unter Bildung eines Leevolumens eingebaut ist und bei dem im Leervolumen des Gehäuses eine saugfähige Masse enthalten ist, die den aus dem Wickel austretenden Elektrolyt bindet.

Der Einsatz von Elektrolytkondensatoren in Bereichen, in denen erhöhte Brand- und Explosionsgefahr besteht, z.B. im Bergbau, ist nicht ungefährlich, wenn der Betriebselektrolyt brennbare Bestandteile, wie z.B. Ethylenglykol, enthält und freier Elektrolyt, wenn auch z.T. nur in geringen Mengen, nicht ausgeschlossen werden kann. Aus diesem Grund konnten bisher derartige Elektrolytkondensatoren für den genannten Zweck nicht eingesetzt werden.

Aus der DE-AS 11 08 810 ist es bekannt, bei Tantal-Elektrolytkondensatoren, die einen flüssigen Betriebselektrolyt aus Schwefelsäure aufweisen, diesen Kondensator in ein äußeres Gehäuse einzubauen und den Zwischenraum zwischen innerem und äußeren Gehäuse vollständig mit einer saugfähigen Masse auszufüllen, die Zusätze enthält, welche sich mit dem Elektrolyten ohne Gasbildung zu neutral reagierenden Stoffen umsetzen. Hierdurch soll vermieden werden, daß die (nicht brennbare) Schwefelsäure auf jeden Fall an einem Entweichen in die Umgebung verhindert wird, wenn das innere Gehäuse aus irgendwelchen Gründen undicht wird. Da derartige Kondensatoren relativ viel flüssigen Betriebselektrolyt enthalten, ist es erforderlich, das gesamte Leervolumen zwischen inneren und äußeren Gehäuse mit der genannten saugfähigen Masse auszufüllen und weiterhin ein genügend großes Leervolumen vorzusehen. Derartige Kondensatoren sind somit wesentlich größer als es an und für sich im Hinblick auf die elektrischen Werte erforderlich wäre, so daß die Volumenkapazität erheblich verkleinert ist. Außerdem wird die Herstellung verteuert, da ein großes Leervolumen mit der saugfähigen Masse ausgefüllt werden muß.

Aufgabe der Erfindung ist es daher, einen Aluminiumelektrolytkondensator der eingangs genannten Art anzugeben, der in wirtschaftlicher Weise das Ausfließen von Elektrolyt im Störungsfall verhindert.

Diese Aufgabe wird erfindungsgemäß dadurch gelöst, daß die Masse rieselfähig ist und das Leervolumen nur teilweise füllt.

In bevorzugter Weise besteht die Masse aus Kieselsäure, Kieselgur oder Hydrargillit (Al(OH)₃).

Vorzugsweise sind 25 bis 50 Vol% des Leervolumens mit der rieselfähigen Masse gefüllt.

Bei den genannten flüssigen Betriebselektrolyten ist im wesentlichen der gesamte Elektrolyt in den zwischen den Aluminiumfolien angeordneten Abstandshaltern enthalten. Es besteht insbesondere im Störungsfall die Gefahr, daß Elektrolyt aus dem Wickel austreten kann. Durch Verwendung einer saugfähigen, rieselfähigen Masse besteht der Vorteil, daß das saugfähige Material an die tiefste Stelle des Gehäuses rieselt, also zum eventuell freien Elektrolyt. Hierdurch wird der Vorteil erzielt, daß nicht das gesamte Leervolumen mit einer saugfähigen Masse gefüllt werden muß.

Die Masse, die bei genügender Reinheit im Stande ist, freien und während der Lebensdauer des Kondensators aus dem Wickel austretenden Elektrolyt zu binden, besteht vorzugsweise aus Kieselsäure, die durch Knallgashydrolyse aus SiCl₄ gewonnen ist, die unter dem Handelsnamen "Aerosil" erhältlich ist.

Der Kondensator gemäß der Erfindung eignet sich deshalb zum Einsatz in den eingangs angeführten brand- bzw. explosionsgefährdeten Bereichen.

## Patentansprüche

1. Aluminium-Elektrolytkondensator, der aus zwei Lagen miteinander verwickelter Aluminiumfolien besteht, von denen die Anodenfolie mit einer als Dielektrikum wirkenden Oxidschicht versehen ist, bei dem zwischen den Folien Abstandshalter angeordnet sind, die mit einem flüssigen, brennbare Bestandteile enthaltenden Betriebselektrolyt getränkt sind, der in ein Gehäuse unter Bildung eines Leervolumens eingebaut ist, und bei dem im Leervolumen des Gehäuses eine saugfähige Masse enthalten ist, die den aus dem Wickel austretenden Elektrolyt bindet, **dadurch gekennzeichnet,** daß die Masse rieselfähig ist und das Leervolumen nur teilweise füllt.

2. Aluminium-Elektrolytkondensator nach Anspruch 1, **dadurch gekennzeichnet,** daß die Masse aus Kieselsäure, Kieselgur oder Hydrargillit (Al(OH)₃) besteht.

3. Aluminium-Elektrolytkondensator nach Anspruch 1 oder 2, **dadurch gekennzeichnet,** daß 25 bis 50 Vol% des Leervolumens mit der rieselfähigen Masse gefüllt sind.

## Claims

1. Aluminium electrolytic capacitor comprising two layers of aluminium foils wound together, of which the anode foil is provided with an oxide layer which acts as dielectric, in which spacers impregnated with a liquid working electrolyte containing flammable constituents are disposed between the foils, which is mounted in a housing with the formation of an empty volume, and in which the empty volume of the housing contains an absorbent material which binds the electrolyte escaping from the winding, characterised in that the material is pourable and only partly fills the empty volume.

2. Aluminium electrolytic capacitor according to Claim 1, characterised in that the material comprises silicic acid, kieselguhr or hydrargillite (Al(OH)₃).

3. Aluminium electrolytic capacitor according to Claim 1 or 2, characterised in that 25 to 50% by volume of the empty volume is filled with the pourable material.

## Revendications

1. Condensateur électrolytique à l'aluminium, constitué de deux couches de feuilles d'aluminium enroulées l'une avec l'autre, dont la feuille d'anode est munie d'une couche d'oxyde servant de diélectrique, dans lequel il est prévu, entre les feuilles, des intercalaires qui sont imprégnées d'un électrolyte de fonctionnement contenant des constituants liquides et combustibles, et qui est inséré dans un boîtier avec formation d'un volume vide et dans lequel une masse absorbante, qui fixe l'électrolyte sortant de l'enroulement, est contenue dans le volume vide du boîtier, caractérisé en ce que la masse est susceptible de s'écouler et le volume vide n'est rempli que partiellement.

2. Condensateur électrolytique en aluminium suivant la revendication 1, caractérisé en ce que la masse est en acide silicique, en diatomite ou en hydrargillite (Al(OH)₃.

3. Condensateur électrolytique en aluminium suivant la revendication 1 ou 2, caractérisé en ce que de 25 à 50 % en volume du volume vide sont emplis de la masse susceptible de s'écouler.
